Europäisches Patentamt

European Patent Office

Office européen des brevets

(19)

(11) Veröffentlichungsnummer: **0 084 166**
A2

(12) # EUROPÄISCHE PATENTANMELDUNG

(21) Anmeldenummer: **82112013.6**

(22) Anmeldetag: **24.12.82**

(51) Int. Cl.³: **B 60 L 5/20**

(30) Priorität: **20.01.82 DE 3201568**

(43) Veröffentlichungstag der Anmeldung:
**27.07.83 Patentblatt 83/30**

(84) Benannte Vertragsstaaten:
**AT CH FR IT LI NL**

(71) Anmelder: **DORNIER GMBH**
**Postfach 1420**
**D-7990 Friedrichshafen(DE)**

(72) Erfinder: **Seidl, Ernst**
**Mettnauweg 1**
**D-7990 Friedrichshafen 1(DE)**

(72) Erfinder: **Wuch, Peter**
**Schillerstrasse 1**
**D-7778 Markdorf(DE)**

(74) Vertreter: **Landsmann, Ralf, Dipl.-Ing.**
**Kleeweg 3**
**D-7990 Friedrichshafen 1(DE)**

(54) **Elektrischer Stromabnehmer.**

(57) Elektrischer Stromabnehmer für ein gleisloses oder gleisgebundenes, elektrisch angetriebenes Fahrzeug, bei dem der Stromabnehmer (1) ein aus einem Leichtmetall bestehenden und an seiner Oberfläche mit wenigstens einer dielektrischen und mechanische Schwingungen dämpfenden Schicht (4) umantelter elektrischer Leiter ist.

FIG. 1

EP 0 084 166 A2

DORNIER GMBH
7990 Friedrichshafen

Reg. 2500

Elektrischer Stromabnehmer

Die Erfindung betrifft einen elektrischen Stromabnehmer für ein gleisloses oder gleisgebundenes elektrisch angetriebenes Fahrzeug.

Elektrische Stromabnehmer sind beispielsweise in Form von Stromabnehmerstangen bei gleislosen elektrisch betriebenen Fahrzeugen, wie Oberleitungsbussen(O-Bussen) oder von rhombusförmigen Parallelogrammbügeln, sogenannten Pantographen bei gleisgebundenen Elektrofahrzeugen hinreichend bekannt und stellen Verbindungselemente zwischen dem daran angeordneten, mit dem Fahrdraht in elektrischem Kontakt stehenden Schleifschuh und dem elektrischen Antrieb des Fahrzeugs dar. Diese Stromabnehmer bestehen aus Stahlrohren, durch welche die zur Übertragung der elektrischen Energie benötigte Verkabelung geführt wird.

Nachteilig ist hierbei das grosse Gewicht der Verbindungselemente und der dazu benötigte mechanische Aufwand für deren Führung und Verstellung. Ferner neigen diese Elemente wegen ihres hohen Gewichtes und ihrer mechanisch ungedämpften Eigenschaften zu Störungen im Fahrbetrieb, z. B. Beschädigung des Fahrdrahtes und des Stromabnehmers.

Davon ausgehend ist es Aufgabe der Erfindung, einen elektrischen Stromabnehmer zu schaffen, der ein geringes Gewicht mit ausreichender Stabilität aufweist, selbst elektrisch gut leitend ist und gegen den Fahrdraht hinreichend sicher elektrisch isoliert ist.

Erfindungsgemäss sind zur Lösung der gestellten Aufgabe die kennzeichnenden Merkmale von Anspruch 1 vorgesehen. Vorteilhafte Weiterbildungen sind in den Unteransprüchen gekennzeichnet.

Der Vorteil besteht darin, dass durch Verwendung einer Leichtmetallegierung ein geringes Gewicht des Stromabnehmers bzw. Leiters erzielt wird und sich hierdurch der vertikale Anpreßdruck zwischen Stromabnehmer und Fahrdraht gegenüber herkömmlichen Einrichtungen um etwa einem Drittel reduziert. Damit verbunden ist ein geringerer Abrieb der Kontaktkohle am Schleifschuh durch den Fahrdraht und eine Erhöhung der Standzeit bzw. Lebensdauer. Die damit erreichte Gewichtsminderung des Stromabnehmers bzw. Leiters führt zu kleineren Antriebseinheiten zur Steuerung automatischer Stromabnehmer. Ferner wird aufgrund des geringeren Gewichts sowie der guten Dämpfungseigenschaften bei Auftreten mechanischer Schwingungen durch z. B. einer GFK-Ummantelung ein besseres dynamisches Verhalten erreicht, welches zu einem zuverlässigeren Zusammenspiel zwischen dem Stromabnehmer und dem Fahrdraht führt. Ausserdem werden durch eine derartige Ummantelung des Stromabnehmers bzw. Leiters erhöhte und stabile elektrische Isolationswerte gegen die Spannung des Fahrdrahtes unter Umweltbedingungen über die Gesamtlebensdauer erzielt. Zudem wird der Stromabnehmer (Leiter) durch die bessere mechanische Widerstandsfestigkeit der Ummantelung vor mechanischen Beschädigungen bei Entdrahtung der Schleifschuhe geschützt. Der zum Fahrdraht hin verjüngte Stromabnehmer bzw. Leiter besteht aus einem Leichtmetall einer speziellen Legierung aus AlMgSi, bei welcher der prozentuale Anteil von Mg zwischen 0,6 und 1,4 und von Si zwischen 0,6 und 1,2 liegt.

Am verjüngten Ende ist ein mit dem Leichtmetallrohr elektrisch leitend verbundener Schleifschuh befestigt. Die erforderliche doppelte elektrische Isolation des Leichtmetallrohres oder Stabes bzw. Stromabnehmers gegen das Fahrzeug besteht aus der auf die Oberfläche des Rohres oder Stabes z. B. durch Kleben aufgebrachten Ummantelung, wobei diese derart ausgeführt ist, dass die beiden Isolationsschichten durch eine dazwischen angeordnete elektrisch leitende Einlage voneinander getrennt sind und auf ihre dielektrischen Werte (Isolationswerte) über eine Prüföffnung geprüft werden können.

Die vom Fahrdraht über den Schleifschuh an den Stromabnehmer (Rohr) geführte elektrische Energie wird von diesem über eine an einem dafür vorgesehenen Anschlusspunkt und daran befestigte elektrische Leitung zum fahrzeugseitigen Verbraucher (Elektromotor) geführt.

Ein Ausführungsbeispiel ist folgend beschrieben und durch Skizzen erläutert.

Es zeigen:

Fig. 1   einen elektrischen Stromabnehmer,
Fig. 2   einen Teilabschnitt aus Fig. 1 in teilweise geschnittener Ansicht,
Fig. 3   das Einspannende des Stromabnehmers gem. Fig. 1.

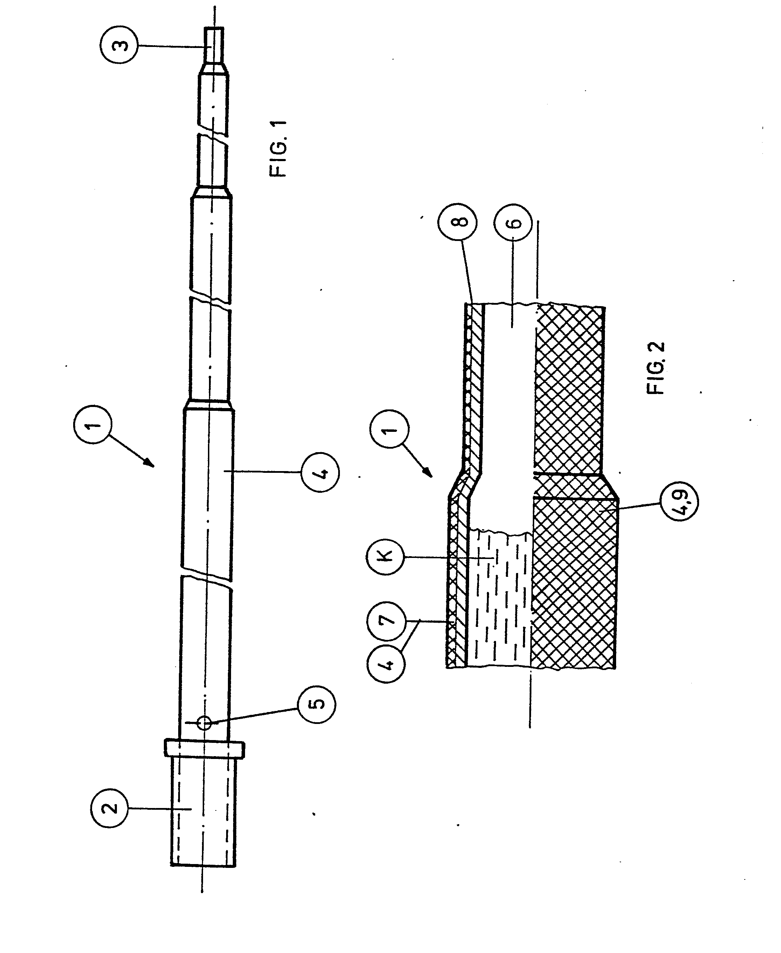

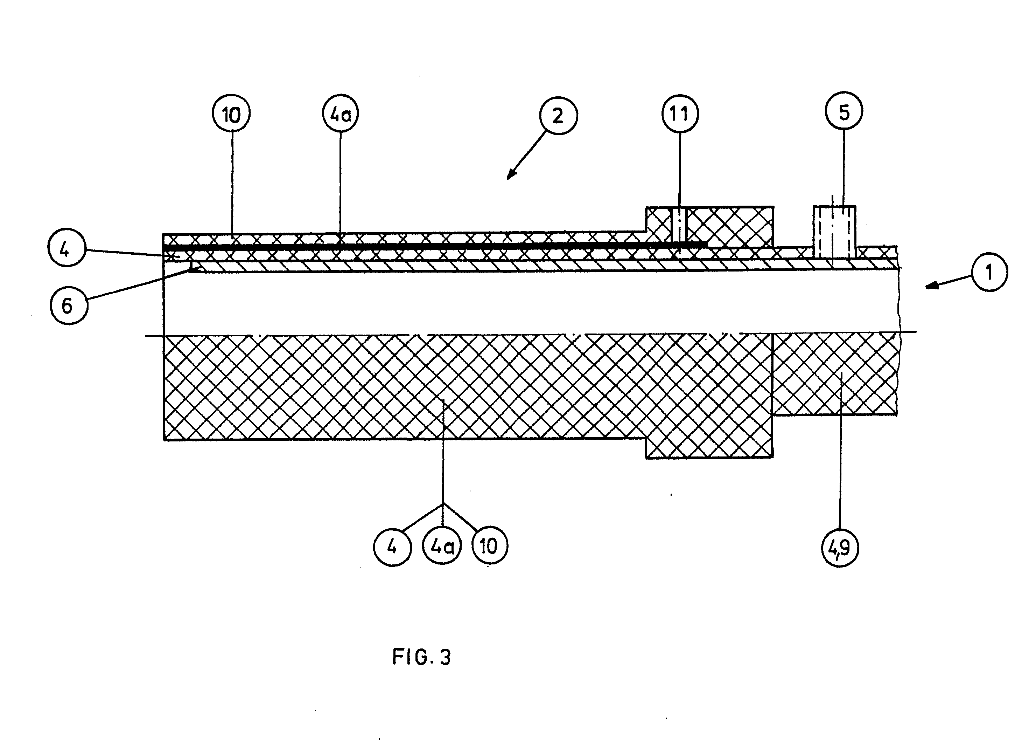

Der aus Fig. 1 ersichtliche, teilweise gekürzt und stufenförmig verjüngt dargestellte elektrische Stromabnehmer 1 besteht aus einem elektrisch leitenden Leichtmetallrohr spezieller AlMgSi - Legierung (z. B. mit prozentualen Anteilen von Mg zwischen 0,6 und 1,4 und von Si zwischen 0,6 und 1,2. Die Verjüngung verläuft dabei vom Einspannende (links) 2 zum Aufsteckende (rechts) 3 für den mit dem Fahrdraht kontaktierenden Schleifschuh (in der Fig. nicht dargestellt). Der Stromabnehmer 1 ist zwischen dem Einspannende 2 und dem blanken Aufsteckende 3 von einer GFK-Schicht 4 ummantelt (siehe auch Fig. 2,3). Nahe dem Einspannende 2 ist ein Anschlusspunkt 5 vorgesehen, an dem eine elektrische Leitung (nicht näher gezeigt) zur elektrischen Energieübertragung vom Fahrdraht über den Schleifschuh (beide nicht näher dargestellt) und Stromabnehmer 1 zum elektrischen Verbraucher im Fahrzeug (nicht näher gezeigt) anschliessbar ist.

Aus Fig. 2 ist ein Teilabschnitt des in Fig. 1 beschriebenen Stromabnehmers 1 in teilweise geschnittener Ansicht ersichtlich. Auf dem Leichtmetallrohr 6 des Stromabnehmers 1 ist die mit einer Einlage 7 (z. B. Faserstruktur) versehene GFK-Schicht 4 mittels eines Klebers 8 als Ummantelung 9 doppelt bzw. schichtweise umwickelt und befestigt. Dadurch wir das elektrisch leitende Leichtmetallrohr 6 des Stromabnehmers 1 nach aussen und insbesondere gegen die elektrische Spannung des Fahrdrahtes isoliert, sowie, bedingt durch die Gewichtsverminderung, eine gute Dämpfung von während des Fahrbetriebes auftretenden mechanischen Schwingungen erzielt. Zur Kühlung kann das Leichtmetallrohr 6 durch ein Kühlmedium K beaufschlagt werden. Statt aus einem Leichtmetallrohr kann der Stromabnehmer auch aus einem Leichtmetall-Vollstab ausgebildet sein.

Aus Fig. 3 ist das Einspannende 2 des Stromabnehmers 1 ersichtlich. Der elektrische Leiter bzw. das Leichtmetallrohr 6 ist hier durch die erste dielektrische GFK-Schicht 4, einer darauf angeordneten elektrischen leitenden Schicht 4a und einer darüber angeordneten zweiten dielektrischen Schicht 10 gegen das Fahrzeug und das Leichtmetallrohr 6 doppelt elektrisch isoliert. Am Anschlag des Einspannendes 2 ist die Schicht 10 mit einer bis zur Schicht 4a durchgehenden Prüföffnung 11 versehen. Damit ist die Isolationsschicht 10 und in Verbindung über den Anschlusspunkt 5 die Isolationsschicht 4 auf ihre dielektrischen Werte prüfbar.

21. Dez. 1982
Kr/eh

**0084166**

DORNIER GMBH
7990 Friedrichshafen

Reg. 2500

Patentansprüche

1. Elektrischer Stromabnehmer für ein gleisloses oder gleisgebundenes, elektrisch angetriebenes Fahrzeug, dadurch gekennzeichnet, dass der Stromabnehmer (1) ein aus einem Leichtmetall bestehender und an seiner Oberfläche mit wenigstens einer dielektrischen und mechanische Schwingungen dämpfenden Schicht (4) ummantelter elektrischer Leiter ist.

2. Elektrischer Stromabnehmer nach Anspruch 1, dadurch gekennzeichnet, dass das Leichtmetall z. B. aus einer AlMgSi-Legierung besteht, bei der der prozentuale Anteil von Mg zwischen 0,6 und 1,2 liegt.

3. Elektrischer Stromabnehmer nach den Ansprüchen 1 und 2, dadurch gekennzeichnet, dass der elektrische Leiter als Rohr bwz. Hohlleiter (6) ausgebildet ist.

4. Elektrischer Stromabnehmer nach den Ansprüchen 1 und 2, dadurch gekennzeichnet, dass der elektrische Leiter ein Vollstab ist.

5. Elektrischer Stromabnehmer nach einem der Ansprüche 1 bis 4, dadurch gekennzeichnet, dass wenigstens eine dielektrische Schicht (4) aus GFK besteht.

- 2 -

6. Elektrischer Stromabnehmer nach einem der Ansprüche 1 bis 5, dadurch gekennzeichnet, dass der elektrische Leiter von wenigstens einer Schicht (4) in einfacher, mehrfacher und/oder gekreuzter schichtweisen Form ummantelt ist.

7. Elektrischer Stromabnehmer nach den Ansprüchen 1 bis 4, dadurch gekennzeichnet, dass die Schicht(en) (4) aus einem Lack besteht oder bestehen.

8. Elektrischer Stromabnehmer nach den Ansprüchen 1 bis 3 und 5 bis 6, dadurch gekennzeichnet, dass der als Rohr bzw. Hohlleiter (6) ausgebildete elektrische Leiter mit einem Kühlmedium (k) beaufschlagt ist.

9. Elektrischer Stromabnehmer nach den Ansprüchen 1 bis 8, dadurch gekennzeichnet, dass der Stromabnehmer (1) an seinem Einspannende (2) mit einer doppelten elektrischen Isolation versehen ist.

10. Elektrischer Stromabnehmer nach einem der Ansprüche 1 bis 9, dadurch gekennzeichnet, dass die Isolation aus einer ersten dielektrischen Schicht (4), einer darauf angeordneten elektrisch leitenden Schicht (4a) und einer auf diese Schicht (4a) angeordneten zweiten dielektrischen Schicht (10) besteht.

11. Elektrischer Stromabnehmer nach einem der Ansprüche 1 bis 10, dadurch gekennzeichnet, dass die äussere zweite Schicht (10) eine zur darunterliegenden elektrisch leitenden Schicht (4a) führende Prüföffnung (11) aufweist.

21. Dez. 1982
Kr/eh

FIG. 1

FIG. 2

FIG. 3

0084166